# EUROPÄISCHE PATENTSCHRIFT

(11) **EP 0 533 125 B1**
(45) Veröffentlichungstag und Bekanntmachung des Hinweises auf die Patenterteilung: **03.04.1996**
(21) Anmeldenummer: 92115814.3
(22) Anmeldetag: 16.09.1992
(51) Int. Cl.: B23Q 3/08

(54) **Einfassung zur Fixierung von zu bearbeitenden Werkstücken und Verfahren zur Herstellung und Trennung der Einfassung**
Work-piece holder and process for assembling and desmounting such a holder
Support pour maintenir des pièces à usiner et procédé pour le montage et le démontage de ce support

(30) Priorität: 18.09.1991 DE 4130953
(43) Veröffentlichungstag der Anmeldung: 24.03.1993
(73) Patentinhaber: MTU MOTOREN- UND TURBINEN-UNION MÜNCHEN GMBH, D-80976 München (DE)
(72) Erfinder: Meier, Reinhold, W-8250 Dorfen (DE); Kerger-Knilling, Karl, W-8000 München 50 (DE)

(56) Entgegenhaltungen:
- EP-A- 0 420 088
- DE-A- 3 427 885
- DE-A- 3 439 250
- DE-C- 2 822 828
- FR-A- 2 652 299
- GB-A- 2 166 070
- US-A- 3 084 426

## Beschreibung

Die Erfindung betrifft eine formschlüssige, angegossene Kunststoff aufweisende Einfassung mit parallelen Einspannflächen zur Fixierung von zu bearbeitenden metallischen Werkstücken mit unregelmäßigen Konturen, insbesondere zur Fixierung von Triebwerksschaufeln und ein Verfahren zur Herstellung und Trennung der Einfassung.

Eine aus Metall gegossene Einfassung der gattungsgemäßen Art ist aus GB 2,166,070 bekannt, wobei ein metallisches hochtemperaturfestes Werkstück mit unregelmäßigen Konturen wie beispielsweise eine Triebwerksschaufel in einen Block aus niedrigschmelzendem Metall teilweise eingegossen wird, so daß dabei parallele Einspannflächen entstehen, und damit die Weiterbearbeitung des Werkstücks ermöglicht wird. Ein Nachteil dieser Fixierung besteht darin, daß schmelzflüssiges Metall beim Eingießen mit der Werkstückoberfläche in Berührung kommt, so daß zumindest die Gefahr einer Kontaminierung der Werkstückoberfläche mit Fremdmetallen besteht. Im Hochtemperaturbetrieb des Werkstücks ist eine Beeinflussung der Festigkeitseigenschaften im Bereich der angegossenen Einfassung des bearbeiteten Werkstücks nicht auszuschließen. Ein weiterer Nachteil besteht in der aufwendigen chemischen oder chemo-physikalischen Reinigung der Oberfläche des Werkstücks, wenn eine Kontamination beseitigt werden soll. Nachteilig können beim Erkalten der Metallschmelze des Einfassungsmaterials Risse auftreten. Ein weiterer Nachteil besteht im Handling des metallisch eingefaßten Werkstücks, da der Eingußblock eine erhebliche Gewichtzunahme verursacht. Schließlich ist durch die Weichheit des niedrigschmelzenden Metalls gegenüber dem hochschmelzenden harten Werkstück eine spanabhebende durchgehende Bearbeitung von Einfassungsmaterial und Werkstückmaterial nicht möglich.

Außerdem ist das aus GB 21 66 070 bekannte Verfahren zumindest für Reparaturaufgaben unwirtschaftlich, da eine Metallschmelzenergie aufgebracht werden muß und ein vollständiger Metallgießprozeß mit entsprechend aufwendiger Handhabung von Metall schmelzen und langen Abkühlphasen vorzusehen ist.

Aus dem nächsten Stand der Technik, DE-A 34 39 250, ist ein Spannblock zum Einspannen und Halten von Werkstücken während ihrer Bearbeitung auf einer Werkzeugmaschine bekannt, wobei der Spannblock aus einem gefüllten Kunststoff besteht. Durch diesen Füllstoff ist eine hochpräzise Halterung und Bearbeitung der eingespannten Werkstücke möglich.

Aufgabe der Erfindung ist es, eine gattungsgemäße Einfassung und ein Verfahren zu ihrer Herstellung und Trennung anzugeben, bei der eine gemeinsame spanabhebende Bearbeitung von Einfassungsmaterial und Werkstückmaterial möglich ist, ein für die Werkstückfestigkeit gefahrlose Kontamination von Einfassungsmaterial ohne reinigende Nachbehandlung zulässig ist und gleichzeitig die Kontamination vernachlässigbar gering ist. Ferner soll die Einfassung frei von Materialrissen sein und es sollen die parallelen Einspannflächen eine sichere Fixierung ermöglichen. Ferner ist es Aufgabe der Erfindung, ein Verfahren anzugeben, daß derart kostengünstig ist, daß bereits gebrauchte und beschädigte Bauteile für eine Reparatur eingefaßt werden können.

Die Aufgabe wird erfindungsgemäß dadurch gelöst, daß die Einfassung aus Kunststoff besteht und mehrere beabstandete Rippen aufweist, die durch Stege verbunden sind, wobei die Stege die Vorder- und Hinterkante des Schaufelblattes zumindest teilweise umschließen und die Rippen in einem Winkel zwischen 45° und 90° zur Schaufelblattachse angeordnet sind und das Schaufelblatt umschließen, wobei der Abstand zwischen den Rippen im Bereich des Schaufelfußes oder der Schaufelspitze kleiner ist als in der Schaufelmitte.

Die erfindungsgemäße Einfassung hat den Vorteil, daß Kunststoff bei hohen Einsatztemperaturen des Werkstücks in oxidierender Atmosphäre verbrennt, so daß einzelne Molekülketten, die eventuell die metallische Oberfläche nach Bearbeitungs- und Trennschicht noch kontaminieren könnten, zerfallen und die Festigkeit des Werkstücks nicht negativ verändern. Kunststoff ist durch sein niedriges spezifisches Gewicht leicht handhabbar. Mittels konventioneller Maschinen kannn Kunststoff in wenigen Sekunden an das Werkstück angegossen werden und die gerippte Struktur der parallelen Einspannflächen sichert ein rißfreies Angießen des Einfassungsmaterials, da Kunststoff beim Abkühlen aus dem Erweichungszustand über die Rippen und Stege genügend Wärme abgeben kann, um gleichmäßig abzukühlen und zu schrumpfen. Außerdem besitzt Kunststoff bei Raumtemperatur noch eine ausreichende plastische Fließfähigkeit, um frei von Rissen zu schrumpfen.

Die Einfassung dient der Fixierung von Triebwerksschaufeln, wobei die Stege die Vorder- und Hinterkante des Schaufelblattes zumindest teilweise umschließen. Damit ist der Vorteil verbunden, daß Vorder- und Hinterkante vor mechanischen Beschädigungen beim Bearbeiten geschützt sind und gleichzeitig die Position der Rippen auf dem Schaufelblatt fixiert wird.

Dazu werden die Rippen orthogonal oder in einem Winkel zwischen 45° und 90° zur Schaufelblattachse angeordnet und umschließen zumindest teilweise das Schaufelblatt. Das hat den Vorteil, daß die Schaufelblattachse genauer ausgerichtet werden kann und eine sichere Fixierung der Schaufel gewährleistet.

Einen besonderen Vorteil liefert die bevorzugte Verwendung eines Thermoplastes als Einfassungswerkstoff. Ein Thermoplast kann mehrfach verwendet werden, da er bei niedrigen Temperaturen hart und zäh ist und bei erhöhten Temperaturen erweicht. Damit wird ein umweltverträgliches Einfassen möglich; denn der Thermoplast kann näherungsweise zu 100% ohne kostenintensive Aufbereitungsschritte wiederverwendet werden.

Ein bevorzugter Werkstoff für die Einfassung ist Polystyrol. Dieser Kunststoff ist bei Raumtemperatur hart und fest und in der Lage eine unregelmäßige Werkstückskontur in Rippen nach einem Anguß bei Erweichungstemperatur und Abkühlung auf Raumtemperatur rißfrei zu umschließen. Die Festigkeit ist so groß, daß ein Einspannen der Rippen in herkömmliche Fixierwerkzeuge verformungsfrei möglich ist. Außerdem ist dieser Kunststoff mit den gleichen wassergekühlten Werkzeugen wie das Werkstück spanabhebend bearbeitbar.

Bei einer bevorzugten Ausführung der Einfassung sind die Rippen und die Stege von annähernd gleichgroßer Querschnittsfläche. Das hat den Vorteil, daß Schrumpfspannungen an den Übergängen von Rippen und Stegen minimiert werden und eine rißfreie Einfassung ermöglicht wird.

Eine weitere bevorzugte Ausführung des Verfahrens sieht vor, daß das Werkstück zwischen den Rippen vollständig von der Einfassung umhüllt wird. Dadurch wird einerseits erreicht, daß die Position der Rippen und Stege auf dem Werkstück zusätzlich gesichert wird und andererseits, daß vorteilhaft das Werkstück an nicht bedeckten freiliegenden Oberflächen galvanisch beschichtet oder elektro-chemisch oder chemo-physikalisch bearbeitet werden kann.

Bei der Herstellung und Reparatur einer Triebwerksschaufel wird zunächst das Schaufelblatt endbearbeitet und dazu im Bereich des Fußes oder wenn ein angegossenes Deckbandsegment als integraler Bestandteil vorhanden ist, an dem Deckbandsegment eingespannt. Zur Endbearbeitung des Deckbandsegmentes und/oder des Schaufelfußes wird danach um das Schaufelblatt eine Einfassung gegossen, um geeignete parallele Einspannflächen herzustellen. Eine bevorzugte Ausbildung der Einfassung sieht deshalb vor, daß der Abstand zwischen den Rippen im Bereich des Schaufelfußes oder der Schaufelspitze kleiner ist als in der Schaufelblattmitte.

In der Schaufelblattmitte ist vorzugsweise der Abstand zwischen den Rippen größer als die doppelte Rippendicke. Mit dieser Anordnung der Rippen lassen sich vorteilhaft die Einspannkräfte auf das Schaufelblatt verteilen, ohne daß deformierende Einspannkräfte auftreten, zumal Schaufelblätter in Flugtriebwerken äußerst dünne Wandstärken in der Schaufelblattmitte aufweisen.

Ein bevorzugtes Verfahren zur Herstellung einer Einfassung besteht darin, das Werkstück in eine Aufnahmeform einer Spritzgußmaschine einzupassen und den Kunststoff für die Einfassung an das Werkstuck spritzzugießen. Dabei ist es von Vorteil, daß bei der Verwendung von Polystyrol als Einfassungsmaterial auch die zu bearbeitenden Flächen wie Schaufelfuß und Deckbandsegment eingegossen werden können, da eine wassergekühlte spanabhebende Bearbeitung beider Matrialien mit den üblichen Werkzeugen vorteilhaft möglich ist. Sofern das Schaufelblatt vollständig von Einfassungsmaterial umhüllt ist, kann sich einer spanabhebenden Bearbeitung vorteilhaft eine galvanische Beschichtung im Deckbandbereich oder im Schaufelfußbereich anschließen und/oder eine elektrochemische Politur oder Ätzung. Auch chemo-physikalische Bearbeitungsschritte wie Vakuumaufdampfen oder Sputtern oder CVD-Abscheidungen sind möglich, wobei die endbearbeitete Schaufelblattoberfläche durch eine vollständig Einfassung geschützt ist.

Zum Trennen des Werkstücks von der Einfassung wird das eingefaßte Werkstück auf eine Temperatur gekühlt, bei der durchgehende Schrumpfrisse in der Einfassung gebildet werden. Da der Kunststoff bei tiefen Temperaturen versprödet und stärker schrumpft als das metallische Werkstück, entstehen durchgehende Schrumpfungsrisse im Kunststoff, ohne daß das Werkstück verformt wird. Die Einfassung platzt von dem Werkstück vorteilhaft rückstandsfrei ab und kann im Falle eines Thermoplastes wiederverwendet und einem Spritzgußverfahren erneut zugeführt werden.

Die folgenden Fig. verdeutlichen die Erfindung an bevorzugten Ausführungsbeispielen.
- Fig. 1: zeigt eine angegossene Einfassung eines Werkstücks vor dessen Endbearbeitung.
- Fig. 2: zeigt eine angegossene Einfassung eines Werkstücks in Seitenansicht.
- Fig. 3: zeigt ein eingefaßtes Werkstück nach Endbearbeitung.

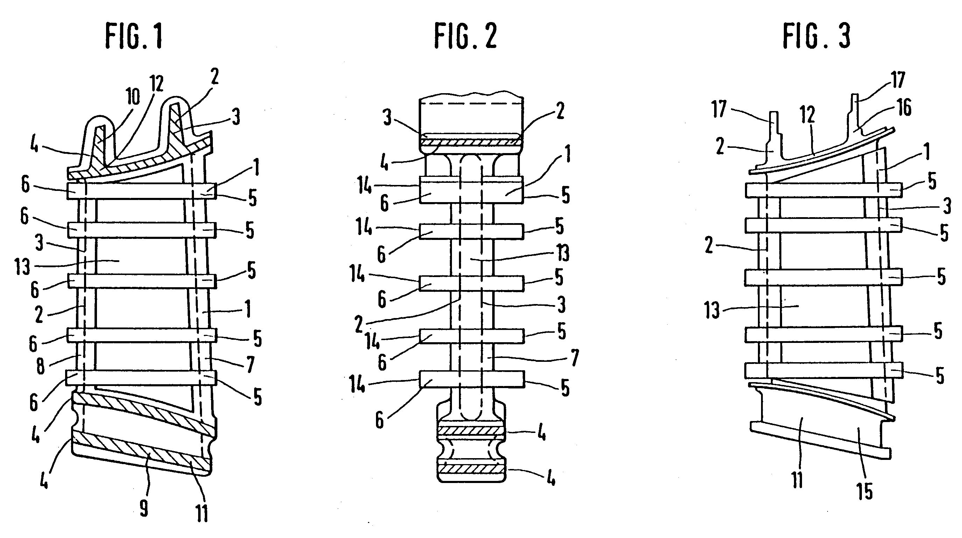

Fig. 1 zeigt eine angegossene Einfassung 1 eines zu bearbeitenden Werkstücks 2 mit unregelmäßigen Konturen wie einer Schaufel 3 für Gasturbinentriebwerke vor der Endbearbeitung. Das Werkstück 2 ist bis auf wenige Positionierflächen 4 mittels Spritzgußtechnologie von einem Einfassungsmaterial aus Kunststoff vollständig umgeben worden. Der Kunststoff ist in diesem Beispiel Polystyrol, ein Thermoplast, dessen Erweichungstemperatur zwischen 80 und 150 °C liegt und der bei Raumtemperatur eine ausreichende Festigkeit besitzt, um Einspannkräfte über planparallel angeordnete Einspannflächen 5 aufzunehmen. Diese Einspannflächen 5 sind auf Rippen 6 angeordnet, die mittels Stegen 7 und 8 auf Abstand gehalten werden. Dieser Abstand verringert sich zu den zu bearbeitenden Flächen 9 und 10 hin. Damit wird ein sicheres Einspannen in der Nähe der Bearbeitungsbereiche gewährleistet.

Im Falle einer Schaufel 3 befinden sich die zu bearbeitenden Flächen im Bereich des Schaufelfußes 11 und im Bereich eines Deckbandsegmentes 12. Schaufelfuß 11 und Deckbandsegment 12 sind integrale Bestandteile einer Schaufel 3. Zwischen diesen ist das Schaufelblatt 13 angeordnet, das vor dem Einfassen bereits seine Endkontur aufweist. Der Steg 7 bedeckt dabei gleichzeitig die Vorderkante des Schaufelblattes 13 und der Steg 8 die Hinterkante, so daß das Schaufelblatt 13 vor mechanischer Beeinträchtigung geschützt ist. Die Querschnittsflächen der Stege 7 und 8 besitzen annähernd die gleiche Größe wie die Querschnittsflächen der Rippen 6.

Die Schaufelblattoberfläche zwischen den Rippen 6 und Stegen 7 und 8 der Einfassung 1 kann ebenfalls von einer dünnen Kunststoffschicht eingefaßt sein. Damit ist bei galvanischen Beschichtungsschritten und/oder bei elektrochemischer Politur oder Ätzung oder bei chemo-physikalischen Bearbeitunsschritten wie Vakuumaufdampfen, Sputtern oder CVD-Abscheidungen im Deckbandbereich oder im Schaufelfußbereich die Schaufeloberfläche geschützt.

Die Kunststoffeinfassung bedeckt dann wie in diesem Beispiel die gesamte Schaufel 3 bis auf wenige Positionierflächen 4. Die Positionierflächen werden beim Spritzguß frei von Einfassungsmaterial gehalten, um beispielsweise beim Fräsen von planparallelen Einspannflächen 5 auf den Rippen 6 der Einfassung 1 geeignete Bezugsflächen zur Justage des Werkstücks 2 vorzugeben.

Bei der Endbearbeitung kann der Kunststoff der Einfassung 1 ohne zusätztliche Sonderwerkzeuge spanabhebend mit dem Werkstück 2 gemeinsam wassergekühlt bearbeitet werden.

Fig. 2 zeigt eine angegossene formschlüssige Einfassung 1 eines Werkstücks 2 in Seitenansicht. Nach dem Spritzgießen der Einfassung 1 aus Rippen 6 und Stegen 7 wurden die Einspannflächen 5 und 14 an den Rippen planparallel nach Justage in Bezug auf die Positionierflächen 4 gefräst. Dieser Frässchritt ist nicht erforderlich, wenn die Einfassung 1 nach dem Spritzguß ausreichend exakt positionierte, planparallele Einspannflächen 5 und 14 auf den Rippen 6 aufweist.

Fig. 3 zeigt ein eingefaßtes Werkstück 2 nach Endbearbeitung. Dabei ist mit der Endbearbeitung des unteren 15 und oberen 16 Werkstückbereichs auch die Einfassung 1 aus Kunststoff mit abgearbeitet worden. Im Falle der Endbearbeitung einer Schaufel 3 wurde der Schaufelfuß 11 und ein Deckbandsegment 12 mit Dichtspitzen 17 in geometrischem Bezug auf die Einspannfläche 5 bearbeitet, so daß die Einfassung 1 mit ihren planparallelen Einspannflächen 5 im Bereich des Schaufelblattes 13 stehengeblieben ist. Mit einem Abkühlverfahren wird nach der Endbearbeitung der verbliebene Rest der Einfassung 1 vom Schaufelblatt 13 getrennt. Dazu wird das eingefaßte Werkstück 1 auf eine Temperatur gekühlt, bei der durchgehende Schrumpfungsrisse in der Einfassung gebildet werden und die Einfassung von dem Werkstück 2 rückstandsfrei in Bruchstücken abplatzt.

Das Herstellen einer formschlüssigen Einfassung 1 im Spritzgußverfahren erfordert nur Bruchteile einer Minute und das rückstandsfreie Trennen der Einfassung 1 vom Werkstück 2 mittels eines Abkühlschrittes ebenso. Die beim Trennen anfallenden Kunststoffbruchstücke können wiederverwendet werden. Damit steht mit dieser Einfassung 1 ein kostengünstiges Hilfsmittel zur Verfügung, das Bearbeitungsschritte an Werkstücken 2 mit unregelmäßigen Konturen und Reparaturen derartiger Werkstücke 2 kostengünstig und kurzfristig ermöglicht und sogar Reparaturarbeiten wirtschaftlich vertretbar zuläßt.

## Patentansprüche

1. Formschlüssige, angegossene Kunststoff aufweisende Einfassung mit parallelen Einspannflächen zur Fixierung einer Triebwerksschaufel, dadurch gekennzeichnet, daß die Einfassung (1) aus Kunststoff besteht und mehrere beabstandete Rippen (6) aufweist, die durch Stege (7,8) verbunden sind, wobei die Stege (7,8) die Vorder- und Hinterkante des Schaufelblattes (13) zumindest teilweise umschließen und die Rippen in einem Winkel zwischen 45° und 90° zur Schaufelblattachse (13) angeordnet sind und das Schaufelblatt umschließen, wobei der Abstand zwischen den Rippen (6) im Bereich des Schaufelfußes (11) oder der Schaufelspitze kleiner ist als in der Schaufelmitte.

2. Einfassung nach Anspruch 1, dadurch gekennzeichnet, daß die Einfassung (1) aus einem Thermoplast besteht.

3. Einfassung nach Anspruch 1 oder 2, dadurch gekennzeichnet, daß die Einfassung (1) aus Polystyrol besteht.

4. Einfassung nach einem der Ansprüche 1 bis 3, dadurch gekennzeichnet, daß die Rippen (6) und die Stege (7,8) annähernd gleichgroße Querschnittsflächen aufweisen.

5. Einfassung nach einem der Ansprüche 1 bis 4, dadurch gekennzeichnet, daß das Werkstück (2) zwischen den Rippen (6) vollständig von der Einfassung (1) umhüllt wird.

6. Einfassung nach einem der Ansprüche 1 bis 5, dadurch gekennzeichnet, daß der Abstand zwischen den Rippen (6) in der Schaufelblattmitte größer als die doppelte Rippendicke ist.

7. Verfahren zur Herstellung einer Einfassung nach einem der Ansprüche 1 bis 6, dadurch gekennzeichnet, daß das Werkstück (2) in eine Aufnahmeform einer Spritzgußmaschine eingepaßt wird und ein Thermoplast an das Werkstück (2) spritzgegossen wird.

8. Verfahren zur Trennung einer Einfasung nach einem der Ansprüche 1 bis 6, dadurch gekennzeichnet, daß das eingefaßte Werkstück (2) auf eine Temperatur gekühlt wird, bei der durchgehende Schrumpfrisse in der Einfassung (1) gebildet werden.

## Claims

1. A positively locking, integrally cast frame comprising plastics material and parallel clamping faces for fixing a mechanical shovel, characterised in that the frame (1) consists of plastics material and has a plurality of spaced ribs (6) connected together by webs (7, 8), wherein the webs (7, 8) at least partly surround the front and rear edge of the shovel blade (13) and the ribs are arranged at an angle of between 45° and 90° to the shovel blade axis (13) and surround the shovel blade, the distance between the ribs (6) in the region of the shovel base (11) or the shovel tip being smaller than in the shovel centre.

2. A frame according to claim 1, characterised in that the frame (1) is made of a thermoplastic.

3. A frame according to claim 1 or 2, characterised in that the frame (1) is made of polystyrene.

4. A frame according to one of claims 1 to 3, characterised in that the ribs (6) and the webs (7, 8) have cross-sectional areas of approximately the same size.

5. A frame according to one of claims 1 to 4, characterised in that the workpiece (2) is completely enveloped in the frame (1) between the ribs (6).

6. A frame according to one of claims 1 to 5, characterised in that the distance between the ribs (6) in the shovel blade centre is larger than twice the rib thickness.

7. A method of manufacturing a frame according to one of claims 1 to 6, characterised in that the workpiece (2) is fitted into a receiving mould of an injection-moulding machine, and a thermoplastic is injection-moulded on to the workpiece (2).

8. A method of separating a frame according to one of claims 1 to 6, characterised in that the framed workpiece (2) is cooled to a temperature at which shrinkage cracks are formed right through the frame (1).

## Revendications

1. Support en matière synthétique, fixé par une liaison de forme, ayant des surfaces de serrage parallèles pour bloquer une aube de turbine, caractérisé en ce que le support (1) est en matière synthétique et comporte plusieurs nervures (6) écartées, reliées par des entretoises (7, 8), ces entretoises (7, 8) entourant au moins partiellement l'arête avant et l'arête arrière de la lame (13) de l'aube et les nervures font un angle compris entre 45° et 90° par rapport à l'axe de la lame (13) de l'aube et entourent cette lame, la distance entre les nervures (6) au niveau du pied (11) de l'aube ou de la pointe de l'aube étant inférieure à celle au milieu de l'aube.

2. Support selon la revendication 1, caractérisé en ce qu'il (1) est en matière thermoplastique.

3. Support selon la revendication 1 ou 2, caractérisé en ce qu'il (1) est en polystyrène.

4. Support selon l'une des revendications 1 à 3, caractérisé en ce les nervures (6) et les entretoises (7, 8) ont des surfaces de section sensiblement de mêmes dimensions.

5. Support selon l'une des revendications 1 à 4, caractérisé en ce que la pièce (2) est complètement entourée par le support (1) entre les nervures (6).

6. Support selon l'une des revendications 1 à 5, caractérisé en ce qu'au milieu de la lame de l'aube, la distance entre les nervures (6) est supérieure au double de l'épaisseur d'une nervure.

7. Procédé de réalisation d'un support selon l'une des revendications 1 à 6, caractérisé en ce qu'on place la pièce (2) dans un moule de réception d'une machine d'injection, et on injecte une matière thermoplastique sur la pièce (2).

8. Procédé d'enlèvement d'un support selon l'une des revendications 1 à 6, caractérisé en ce qu'on refroidit la pièce (2) munie de son support, à une température correspondant à la formation de fissures de retrait continues dans le support (1).
